**Europäisches Patentamt**

**European Patent Office**

**Office européen des brevets**

(19)

(11) **EP 1 241 537 A1**

(12) **EUROPEAN PATENT APPLICATION**
published in accordance with Art. 158(3) EPC

(43) Date of publication:
**18.09.2002 Bulletin 2002/38**

(51) Int Cl.⁷: **G03H 1/26**

(21) Application number: **00985862.2**

(86) International application number:
**PCT/JP00/09190**

(22) Date of filing: **25.12.2000**

(87) International publication number:
**WO 01/048563 (05.07.2001 Gazette 2001/27)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.12.1999 JP 36762099**

(71) Applicants:
• **Hamamatsu Photonics K.K.**
  **Shizuoka-ken 435-8558 (JP)**
• **Artnow Ltd.**
  **Mutsu-shi, Aomori 035-0073 (JP)**

(72) Inventors:
• **TAKEMORI, Tamiki, Hamamatsu Photonics K.K.**
  **Hamamatsu-shi, Shizuoka 435-8558 (JP)**
• **KON, Kenji**
  **Mutsu-shi, Aomori 035-0073 (JP)**

(74) Representative: **Grosse, Wolfgang, Dipl.-Ing. et al**
**Patentanwälte**
**Herrmann-Trentepohl**
**Grosse - Bockhorni & Partner,**
**Forstenrieder Allee 59**
**81476 München (DE)**

(54) **HOLOGRAM FORMING METHOD**

(57)   When a master hologram is to be formed in this method, a diffusing screen image is output as object light onto a first recording surface 12 via a lens 8'. When a slave hologram is to be formed, a second recording surface 12" is placed in a position where an image of the object light is formed by the lens 8'. In this method, the distance between a diffusing screen 7' and the first recording surface 12 when a master hologram 12' is recorded can be made different from the distance between the master hologram 12' and the second recording surface 12" when a slave hologram 12" is recorded. By varying these distances as needed, a hologram can be formed using a small optical system.

**Fig.1**

EP 1 241 537 A1

## Description

## Technical Field

The present invention relates to a hologram formation method.

## Background Art

(First Prior Art)

A two-step type Lippmann holographic stereogram formation method having parallaxes in the vertical and horizontal directions is known. This hologram formation method is described in Japanese Patent Laid-Open No. 1-321471.

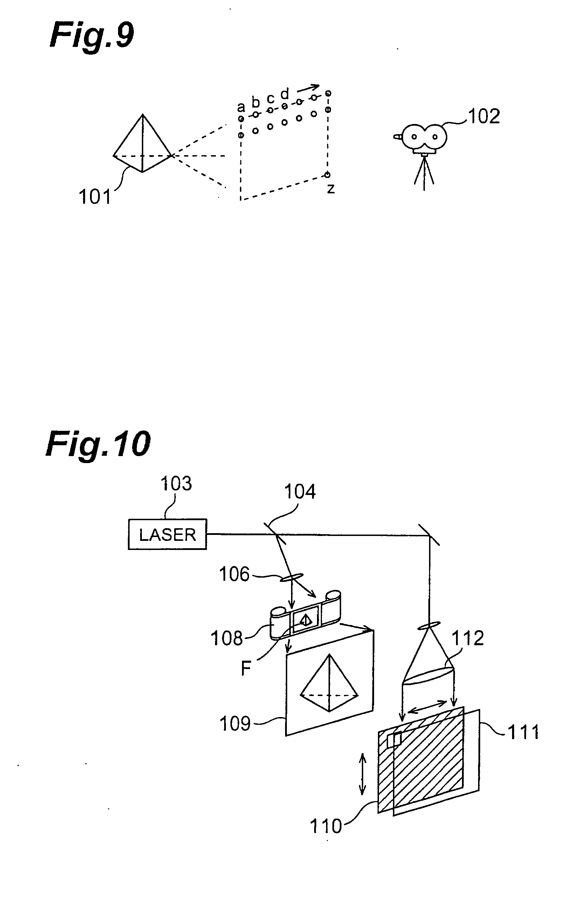

Fig. 9 is a view showing a multi-view image collecting method of a two-dimensional hologram formation apparatus described in Japanese Patent Laid-Open No. 1-321471. Fig. 10 is a view showing a two-dimensional hologram formation method. The main purpose of the methods described in Japanese Patent Laid-Open No. 1-321471 is to form color holograms by swelling. However, the formation of monochromatic holograms will be explained below for the sake of simplicity.

In the methods described in Japanese Patent Laid-Open No. 1-321471, the view of a camera 102 is moved to points a, b, c, d,..., z in the horizontal and vertical directions to photograph an object 101. The number of these views a to z is preferably as large as possible, because they restrict the clearness and smoothness of hologram stereoscopic images. However, the number of the views is usually 100 to 1,000. That is, a film photographing the image of the object 101 observed from 100 to 1,000 points is obtained.

A hologram is formed by setting a film F thus obtained into an optical system shown in Fig. 10. More specifically, the film F is set in a film holder 108 and irradiated with light from a laser light source 103 via a half mirror 104 and a diffusing lens 106, thereby projecting the image onto a screen 109.

Meanwhile, an opening of a mask 110 is moved to a position corresponding to the view at which the object image is sensed. The image projected onto the screen 109 and output reference light from a lens 112 are exposed onto a photosensitive material dry plate 111. This operation is repeated the same number of times as the number of the views. Consequently, an interference image of the object images observed from the individual views is formed on the photosensitive material dry plate 111. This image is a hologram (master hologram).

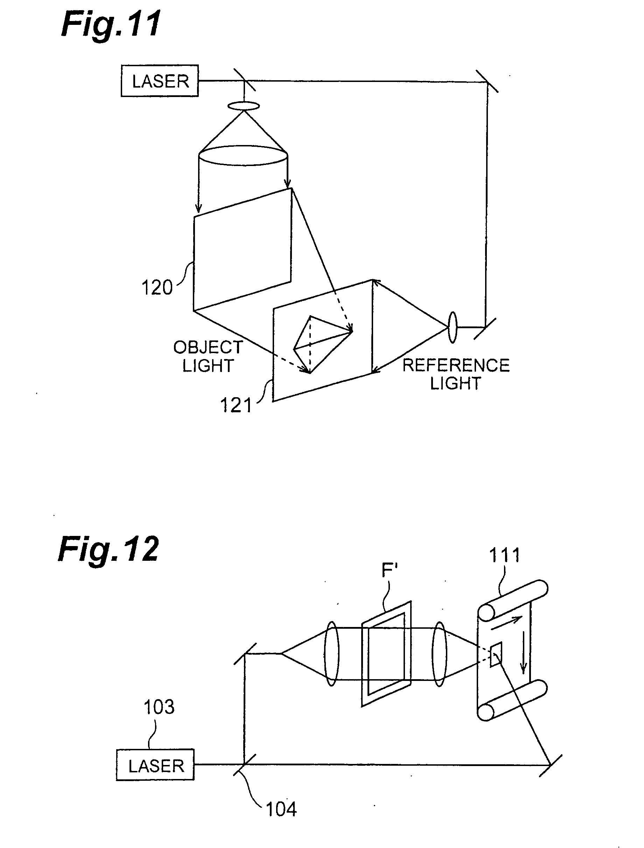

Next, as shown in Fig. 11, this master hologram 120 is irradiated with illuminating light conjugate to the reference light. As a consequence, each element hologram generates a real image in the position of the screen. A second photosensitive material 121 is placed in the position of the screen 109, and the reference light is emitted from the side away from the master hologram 120 to form a second Lippmann hologram 121.

(Second Prior Art)

A one-step type Lippmann hologram formation method is also known. This hologram formation method is described in Japanese Patent Laid-Open No. 3-249686.

Fig. 12 is a view showing the arrangement of a two-dimensional hologram formation apparatus described in Japanese Patent Laid-Open No. 3-249686. In this hologram formation apparatus, an output laser beam from a laser light source 103 is split into two beams by a beam splitter 104. One of the two split laser beams is incident on a spatial optical modulating device F', such as a transmitting liquid crystal display, after the diameter of the beam is increased by a lens system. The amplitude of this laser beam is modulated by each pixel of the spatial optical modulating device F' which displays images from different views formed by a computer. After that, the beam is focused on a photosensitive material 111 by a lens, and interferes with reference light which is split by the beam splitter 104 and incident from behind the photosensitive material 111, thereby forming an element hologram on the photosensitive material 111.

In this manner, dot-like element holograms are arranged in a matrix manner at intervals of 0.3 to 0.5 mm on the photosensitive material 111, forming a Lippmann hologram. To reconstruct the image, the hologram is irradiated with collimated light having a large beam diameter in the same direction as the incident direction of the reference light. Consequently, the individual element holograms on this hologram 111 generate reconstructed waves to reconstruct the object image.

## Disclosure of the Invention

Unfortunately, it is difficult for the method of the first prior art to shorten the hologram recording time for the reason to be explained below.

To shorten the recording time, it is presumably preferable to record a plurality of element holograms at once. However, recording a plurality of element holograms at once is more difficult. That is, if a plurality of mask holes are formed to increase the number of element holograms to be recorded at one time, images projected on a screen overlap each other. To avoid this overlapping, the distance between the screen and the mask may be decreased.

However, even if the distance between the screen and the mask is decreased, when a slave hologram is formed, this slave hologram is also irradiated with the reference light of a master hologram. This restricts the method to contact copying by which the reference light of a slave hologram also functions as the illuminating light of a master hologram. In this contact copying, the ratio of the object light intensity to the reference light intensity when a slave hologram is formed has no degree of freedom. So, the angle of the reference light must be changed when a full-color slave hologram is to be formed by swelling.

When a full-color slave hologram is to be formed by swelling, the angle of the reference light is equal to the angle of the illuminating light of a master hologram corresponding to each color. Therefore, master holograms of at least three colors must be recorded beforehand at the reference light angle equal to the angle of the illuminating light for reconstruction. This makes it difficult for the method of the first prior art to record a plurality of element holograms at one time.

Even in the method of the second prior art, the recording time is difficult to shorten. In this method, a plurality of element holograms are recorded on a master hologram. However, each element hologram must-be 0.3 mm or less in order to be naturally observed as a reconstructed image at an observation distance of 30 cm. In the one-step type hologram formation, therefore, the entire hologram must be filled with 0.3-mm element holograms. This extremely increases the number of element holograms and hence prolongs the recording time.

The method of the first prior art also has the problem that the optical system for recording a master program is large. This is so because when the reference light of a master hologram is different from the reference light of a slave hologram, a screen and a dry plate must be separated a long distance.

The present invention has been made in consideration of the above problems, and has as its object to provide a hologram formation method capable of shortening the recording time and downsizing a hologram formation optical system.

To achieve the above object, a hologram formation method according to the present invention is characterized by comprising the first step of forming a master hologram by obtaining an image displayed on a spatial optical modulating device or on a diffusing screen as object light, irradiating a first recording surface with the object light together with reference light via a lens, and recording interference light of the object light and the reference light on the first recording surface, and the second step of forming a slave hologram by setting a second recording surface in a position where a real image or a virtual image of the object light is formed by the lens, irradiating the master hologram with reference light or conjugate reference light such that the image is formed on the second recording surface and at the same time irradiating the second recording surface with another reference light or another conjugate reference light, and recording interference light of the reference light and another reference light, or of the conjugate reference light and another conjugate reference light, on the second recording surface.

In this method, the distance between the spatial optical modulating device or the diffusing screen and the first recording surface when the master hologram is recorded can be made different from the distance between the master hologram and the second recording surface when the slave hologram is recorded. By varying these distances as needed, a hologram can be formed using a small optical system.

The first step preferably comprises the element hologram formation step of obtaining a parallax image actually or virtually observed from a predetermined view as the object light, and recording interference light of this object light and the reference light in that position on the first recording surface, which corresponds to the view, and repeats the element hologram formation step such that a plurality of views are obtained. In this case, a master hologram can function as a holographic stereogram.

The first step can also comprise the element hologram formation step of obtaining parallax images actually or virtually observed from a plurality of views as the object light, and recording interference light of this object light and the reference light in those positions on the first recording surface, which correspond to the views. As described above, this method can form a hologram by using a small optical system. This is so because the distance to the recording surface can be freely varied. When the distance between the spatial optical modulating device or the diffusing screen and the first recording surface is shortened in the formation of a master hologram, images from a plurality of views can be recorded separately from each other even if they are recorded at once. Accordingly, the recording time can be reduced.

Furthermore, a hologram formation method according to the present invention is a hologram formation method comprising the step of obtaining an image displayed on a spatial optical modulating device or on a diffusing screen as object light, irradiating a first recording surface with the object light together with reference light via a lens, and recording interference light of the object light and the reference light on the first recording surface, wherein the spatial optical modulating device or the diffusing screen is preferably positioned closer to the lens than the front focal point of the lens. Since the spatial optical modulating device or the diffusing screen is positioned closer to the lens than the front focal point of the lens, the optical system can be miniaturized. When the distance between the spatial optical modulating device or the diffusing screen and the first recording surface is shortened in the formation of a master hologram, images from a plurality of views can be recorded separately from each other even if they are recorded at once. Therefore, the recording time can be shortened.

## Brief Description of the Drawings

Fig. 1 is a view for explaining a hologram formation apparatus including an optical system for use in the formation of a master hologram according to the first embodiment;

Fig. 2 is a view for explaining irradiation in the formation and reconstruction of a slave hologram according to the first embodiment;

Fig. 3 is a view for explaining a hologram formation apparatus including an optical system for use in the formation of a master hologram according to the second embodiment;

Fig. 4 is a view for explaining irradiation in the formation and reconstruction of a slave hologram according to the second embodiment;

Fig. 5 is a view for explaining a hologram formation apparatus including an optical system for use in the formation of a master hologram according to the third embodiment;

Fig. 6 is a view for explaining a hologram formation apparatus including an optical system for use in the formation of a master hologram according to the fourth embodiment;

Fig. 7 is a view for explaining a hologram formation apparatus including an optical system for use in the formation of a master hologram according to the fifth embodiment;

Fig. 8 is a view showing the vertical sectional structure of a hologram recording unit including mask plates 10 arranged near a photosensitive material 12, a diffusing screen 7', and the like, according to the fifth embodiment;

Fig. 9 is a view for explaining a multi-view image collecting method of a two-dimensional hologram formation apparatus according to the first prior art;

Fig. 10 is a view for explaining a two-dimensional hologram formation method according to the first prior art;

Fig. 11 is a view for explaining the two-dimensional hologram formation method according to the first prior art; and

Fig. 12 is a view showing the arrangement of a two-dimensional hologram formation apparatus according to the second prior art.

**Best Mode of Carrying Out the Invention**

Hologram formation methods according to embodiments will be described below. The same reference numerals denote the same elements, and a repetitive explanation thereof will be omitted.

(First Embodiment)

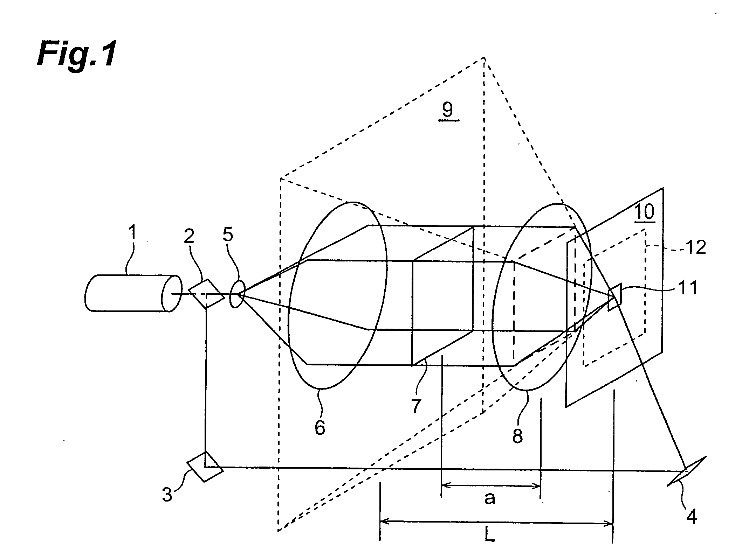

Fig. 1 is a view for explaining a hologram formation apparatus including an optical system for use in the formation of a master hologram. In this embodiment, a master hologram is formed first, and then a slave hologram is formed using this master hologram. The embodiment will be described in detail below.

(Master Hologram Formation Step)

This apparatus includes a laser light source 1 for emitting a single-wavelength laser beam, and a half mirror 2 for splitting the output laser beam from this laser light source 1. The laser beams split by the half mirror 2 pass through (i) an object light emitting optical system and (ii) a reference light emitting optical system, and irradiate the front side (front surface) and back side, respectively, of a photosensitive material 12.

(i) Object Light Emitting Optical System

The object light emitting optical system comprises a beam expander composed of lenses 5 and 6, a spatial optical modulating device 7, and a condenser lens 8. The lenses 5 and 6 are so arranged that the light passing through the half mirror 2 is incident as principal rays. The spatial optical modulating device 7 is irradiated with a plane wave whose beam diameter is increased by the beam expander. The light (spatial optical modulating device image) passing through this spatial optical modulating device 7 enters the condenser lens 8. The object light output from this condenser lens 8 is incident on the front surface of the photosensitive material 12.

The spatial optical modulating device 7 is an electric address type spatial optical modulator and comprises, e.g., a liquid crystal display. This spatial optical modulating device 7 transmits light of a plane wave incident on the liquid crystal display by modulating the intensity (amplitude) of the light for each pixel. A display image on this spatial optical modulating device 7, i.e., an output optical image from the spatial optical modulating device 7 can be changed by changing the transmittance of each pixel. This display image is an object image when an object is observed from one view. In this embodiment, therefore, a display image observed from one view via the condenser lens 8 irradiates the photosensitive material 12 as object light.

(ii) Reference Light Emitting Optical System

The reference light emitting optical system includes plane reflecting mirrors 3 and 4 for further reflecting the reflected light from the half mirror 2, and guiding this reflected light to the rear surface of the photosensitive material 12. The rear surface of this photosensitive material 12 inclines to the incident direction of the reference light. Note that the front surface of the photosensitive material 12 is perpendicular to the optical axis of the condenser lens 8, so principal rays (object light) of the light entering the condenser lens 8 are perpendicularly incident on the photosensitive material 12.

Accordingly, the object light and the plane-wave reference light are perpendicularly and obliquely incident on the same region of the photosensitive material 12 from the front-surface side and the rear-surface side, respectively. By this light incidence, a microscopic region of the photosensitive material 12 is exposed to a so-called Lippmann element hologram. More specifically, the photosensitive material 12 is sandwiched between two mask plates 10 having an opening 11 only in the microscopic region. Interference fringes generated by the incidence of the object light and reference light are recorded in the microscope region of the photosensitive material 12. Note that this photosensitive material 12 is formed by coating a transparent glass substrate with a silver halide emulsion, and a hologram photosensitive material such as bichromated gelatin can also be used as an emulsion.

In this embodiment, images observed from a plurality views are displayed one-by-one on the spatial optical modulating device 7, and element holograms are recorded (by exposure) in those positions of the photosensitive material 12, which correspond to the individual views. That is, assuming two axes which define planes perpendicular to the optical axis of the lens 8 are x- and y-axes, the photosensitive material 12 is moved along these x- and y-axes from one display image to another, thereby changing the recording position of an element hologram. As a consequence, a plurality of element holograms are arranged in a matrix manner on the photosensitive material 12.

When this photosensitive material 12 is developed, a master hologram (12') is formed which has a plurality of Lippmann element holograms each of which changes its transmittance and/or phase in accordance with the intensity of the interference fringes recorded in the microscopic region. This master hologram 12' is a holographic stereogram obtained by recording, on the photosensitive material 12, a plurality of images formed by actually observing an object from a plurality of views, or a plurality of images (computer graphics) regarded as being virtually observed by computations, in accordance with the views. Note that this master hologram 12' is a Lippmann hologram and functions as a multilayered film interference filter having reflectance only to a specific wavelength. A slave hologram formation step will be described next.

(Slave Hologram Formation Step)

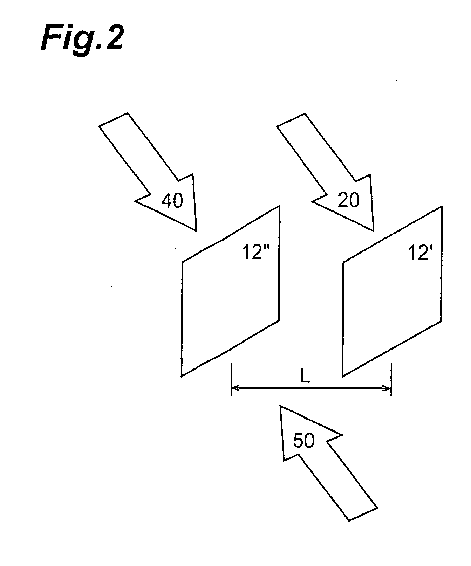

Fig. 2 is a view for explaining irradiation in the formation and reconstruction of a slave hologram. The optical system such as the lens 8 is removed, and conjugate reference light 20 incident in a direction opposite to the reference light is used as the reconstructing light of the master hologram 12' to perform conjugate light reconstruction. In this case, the reconstructing light 20 irradiating an element hologram has a 0th-order diffracted light component which is directly transmitted through the element hologram in the light travelling direction, and a 1st-order diffracted light components which are so reflected as to have the same wave surface as the object light.

Referring back to Fig. 1, assume that the spatial optical modulating device 7 is positioned closer to the lens 8 than the front focal point of the lens 8. That is, letting f be the focal length of the lens 8 and $\underline{a}$ be the distance between the spatial optical modulating device 7 and the lens 8, a < f. In this case, the output optical image from the spatial optical modulating device 7 in the formation of the master hologram 12' is not formed on the photosensitive material 12 even after passing through the lens 8. This object light passing through the lens 8 is equivalent to divergent light from a spatial optical modulating device image (to be referred to as a virtual image hereinafter) 9 virtually placed in a position (to be referred to as a virtual image position and represented by a distance L from the master hologram 12' (photosensitive material 12) hereinafter) closer to the light source than the front focal point.

Returning back to Fig. 2, in the formation of the master hologram 12', this divergent light is recorded in each element hologram. So, when the reconstructing light 20 is emitted, a real image of a spatial optical modulating device image corresponding to each element hologram is reconstructed in the virtual image position L. Since a plurality of element holograms are recorded on the master hologram 12' in accordance with views, these real images are overlapped when the reconstructing light is emitted. Consequently, images (parallax images). having parallaxes observed from a plurality of views are reconstructed as they are superposed in the virtual image position L. This is the object light in the formation of a slave hologram.

When a new photosensitive material 12" is placed in the virtual image position L and irradiated with plane-wave reference light 40 from the side opposite to the object light, Lippmann recording is performed. After development, one slave hologram in which a plurality of parallax images are recorded can be formed. When this slave hologram is irradiated with conjugate reference light as reconstructing light 50, an image hologram is reconstructed. Reflected diffracted light which the slave hologram forms from this reconstructing light 50 corresponds to the superposed parallax images. This light can be observed from the side of the master hologram 12'.

The distance L, a magnification M of the transform from the spatial optical modulating device 7 into the virtual image 9, and the display image on the spatial optical modulating device 7 will be briefly explained below.

The distance L and the magnification M are given by

(Equation 1)

$$L = f \times a/(f - a) + f \qquad (1)$$

$$M = f/(f - a) \qquad (2)$$

Letting P be the pixel pitch of the spatial optical modulating device 7, the resolution of the slave hologram in the vertical and horizontal directions is M x P. Fine three-dimensional reconstructed images can be obtained when M x P < 0.3 mm.

Also, a two-dimensional image transferred from a three-dimensional object as an object to be imaged to the spatial optical modulating device 7 is calculated by a perspective transform by using a view as the position of an element hologram. That is, assume that a three-dimensional object is expressed by a world coordinate system (xw,yw,zw), and the position of an element hologram is (x,y,0) on this world coordinate system. In this case, the position of the three-dimensional object is transformed as follows as a coordinate point (xh,yh) on the spatial optical modulating device 7.

(Equation 2)

$$xh = f \times (xw - x)/z \qquad (3)$$

$$yh = f \times (yw - y)/z \qquad (4)$$

More specifically, the luminance information and color information of (xw,yw,zw) are transferred to the coordinate point (xy,yh), and the calculated two-dimensional image is displayed on the spatial optical modulating device 7. If a plurality of pieces of information are superposed on the same coordinate point (xh,yh), the reconstruction of a master hologram is in many instances placed near the observer. To this end, the values of zw are compared, and zw close to an element hologram is selected.

Next, a case in which the spatial optical modulating device 7 is positioned closer to the light source than the front focal point of the lens 8 will be described below.

(Second Embodiment)

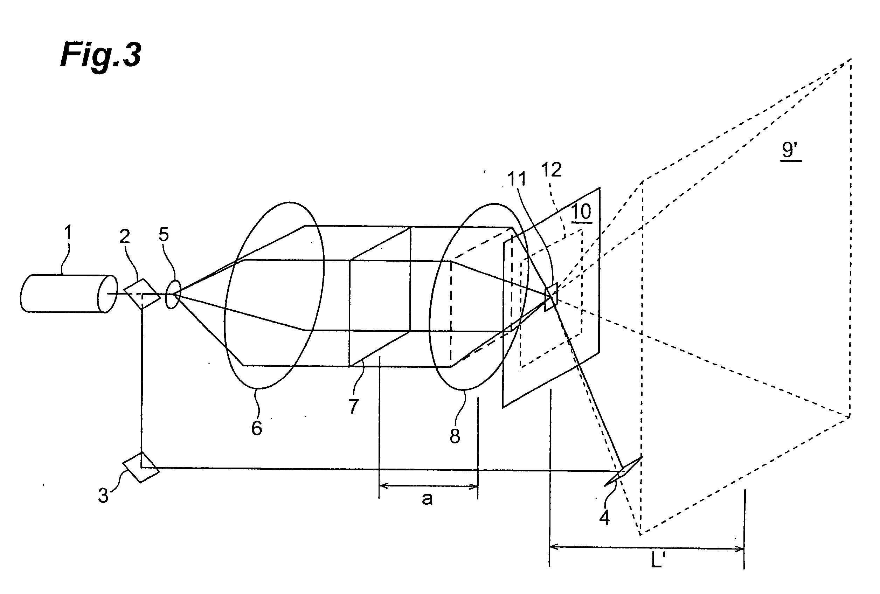

Fig. 3 is a view for explaining a hologram formation apparatus including an optical system for use in the formation of a master hologram. This apparatus is the same as the first embodiment except that a spatial optical modulating device 7 is positioned close to the light source than the front focal point of a lens 8. In this embodiment, a master hologram 12' is formed from a photosensitive material 12 in the same step as in the first embodiment.

If a > f explained in this embodiment, the output optical image from the spatial optical modulating device 7 in the formation of the master hologram 12' is originally formed in a position (to be referred to as a real image position and represented by a distance L' from the master hologram 12' (photosensitive material 12) hereinafter) farther from the lens 8 than the rear focal point of the lens 8, after passing through the lens 8. That is, the output object light from the lens 8 is a spatial optical modulating device image (to be referred to as a real image hereinafter) 9' which is assumed to be formed in the real image position L'.

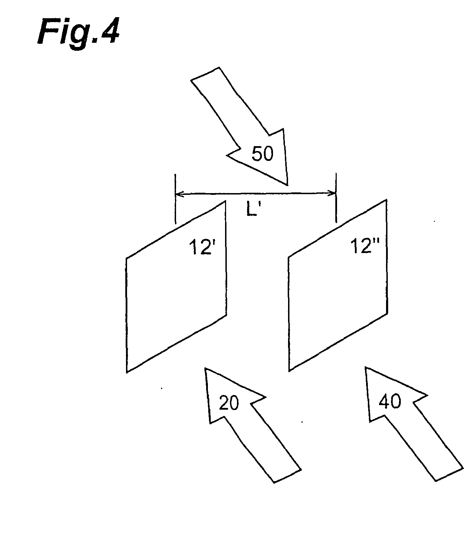

Fig. 4 is a view for explaining irradiation in the formation and reconstruction of a slave hologram. As in the above embodiment, the optical system such as the lens 8 is removed, and reconstructing light 20 incident in the same direction as the reference light in Fig. 3 is used as the reconstructing light of the master hologram 12' to perform reconstruction. In this case, the reconstructing light 20 for illuminating an element hologram has a 0th-order diffracted light component which is directly transmitted through the element hologram in the light travelling direction, and lst-order diffracted light components which are so reflected as to have the same wave surface as the object light.

In the formation of the master hologram 12', the real image 9' assumed to be formed (focused) in the real image position L' is recorded in each element hologram. Therefore, when the reconstructing light 20 is emitted, a real image of a spatial optical modulating device image corresponding to each element hologram is reconstructed in the real image position L'. Since a plurality of element holograms are recorded on the master hologram 12' in accordance with views, these real images are overlapped when the reconstructing light is emitted. Consequently, images (parallax images) having parallaxes observed from a plurality of views are reconstructed as they are superposed in the real image position L'. This is the object light in the formation of a slave hologram.

When a new photosensitive material 12" is placed in the real image position L' and irradiated with plane-wave reference light 40 from the side opposite to the object light, Lippmann recording is performed. After development, one slave hologram in which a plurality of parallax images are recorded can be formed. When this slave hologram is irradiated with conjugate reference light as reconstructing light 50, an image hologram is reconstructed. Reflected diffracted light which the slave hologram forms from this reconstructing light 50 corresponds to the superposed parallax images. This light can be observed from the side of the master hologram 12'.

The distance L' is given by the following equation, and the magnification and perspective transform are given by equations (2) to (4) above.

(Equation 3)

$$L' = f \times a/(a - f) - f \qquad (5)$$

Note that in the formation of a master hologram, it is also possible to project the spatial optical modulating device image onto a diffusing screen, and place this diffusing screen in the same position as the spatial optical modulating device 7 described in the first or second embodiment. Although this arrangement probably requires no special explanation, an embodiment in which the use of a diffusing screen is applied to the first embodiment will be described below as one example.

(Third Embodiment)

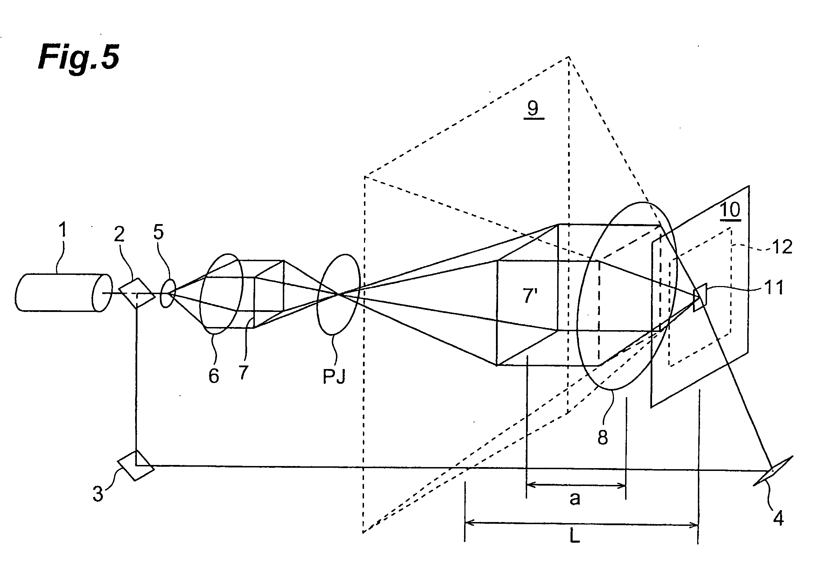

Fig. 5 is a view for explaining a hologram formation apparatus including an optical system for use in the formation of a master hologram. In the apparatus according to this embodiment, a diffusing screen 7' is placed in the position of the spatial optical modulating device 7 according to the first embodiment. In this apparatus, output object light from a spatial optical modulating device 7 illuminated by beam expanders 5 and 6 is projected onto the diffusing screen 7' via an image forming lens PJ. The diffusing screen 7' functions in the same manner as the spatial optical modulating device 7 described in the first embodiment. The rest of the arrangement, including the formation and reconstruction of a slave image, is the same as the first embodiment. That is, in this embodiment, the spatial optical modulating device 7 in the first embodiment is replaced with the diffusing screen 7'.

Since, however, the spatial optical modulating device 7 is projected on an enlarged scale, the resolution of a slave hologram and the display image on this spatial optical modulating device 7 are different.

That is, letting P be the pixel pitch of the spatial optical modulating device 7 and MT be the magnification at which this spatial optical modulating device 7 is projected onto the screen 7', the resolution of the slave hologram in the vertical and horizontal directions are M x P x MT. Fine three-dimensional reconstructed images can be obtained when M x P x MT < 0.3 mm.

Also, a two-dimensional image transferred from a three-dimensional object as an object to be imaged to the spatial optical modulating device 7 is calculated by a perspective transform by using a view as the position of an element hologram. More specifically, the position of the three-dimensional object is transformed as follows as a coordinate point (xh,yh) on the spatial optical modulating device 7.

(Equation 4)

$$xh = -f \times (xw - x)/(zw \times MT) \qquad (6)$$

$$yh = -f \times (yw - y)/(zw \times MT) \qquad (7)$$

More specifically, as in the above embodiments, the luminance information and color information of (xw,yw,zw) are transferred to the coordinate point (xy, yh), and the calculated two-dimensional image is displayed on the spatial optical modulating device 7. If a plurality of pieces of information are superposed on the same coordinate point (xh,yh), the reconstruction of a master hologram is in many instances placed near the observer. To this end, the values of zw are compared, and zw close to an element hologram is selected.

As an example, an embodiment in which the use of a diffusing screen is applied to the second embodiment will be described below.

(Fourth Embodiment)

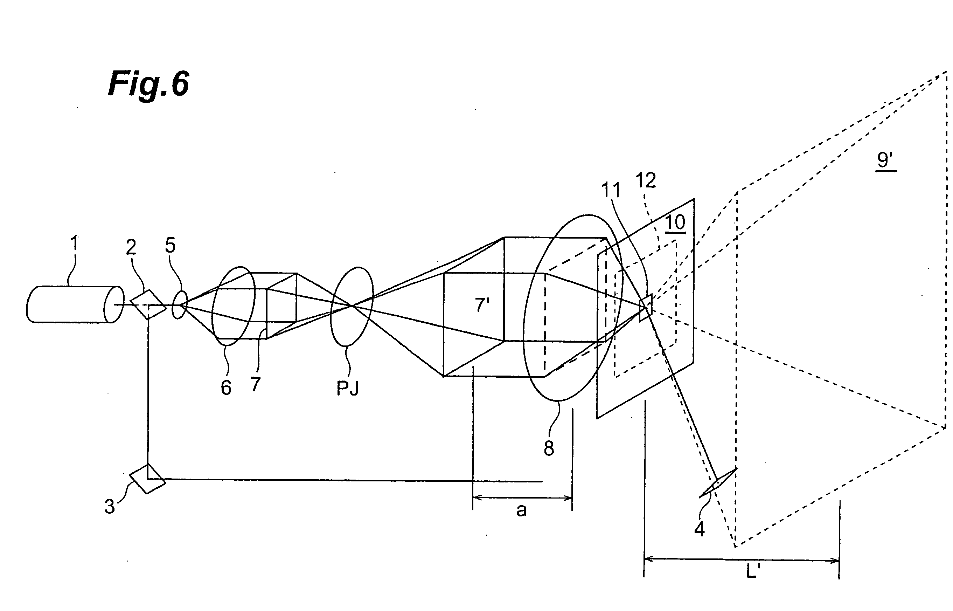

Fig. 6 is a view for explaining a hologram formation apparatus including an optical system for use in the formation of a master hologram. In the apparatus according to this embodiment, a diffusing screen 7' is placed in the position of the spatial optical modulating device 7 according to the second embodiment. In this apparatus, output object light from a spatial optical modulating device 7 illuminated by beam expanders 5 and 6 is projected onto the diffusing screen 7' via an image forming lens PJ. The diffusing screen 7' functions in the same manner as the spatial optical modulating device 7 described in the second embodiment. The rest of the arrangement, including the formation and reconstruction of a slave image, is the same as the second embodiment. That is, in this embodiment, the spatial optical modulating device 7 in the second embodiment is replaced with the diffusing screen 7'. Note that the relationship between the magnification, perspective transform, and the like is the same as in the third embodiment.

In the above description, the formation of element holograms during the formation of a master hologram is done by performing exposure for each element hologram. However, a plurality of element holograms can also be formed by performing exposure once. This embodiment will be explained below.

(Fifth Embodiment)

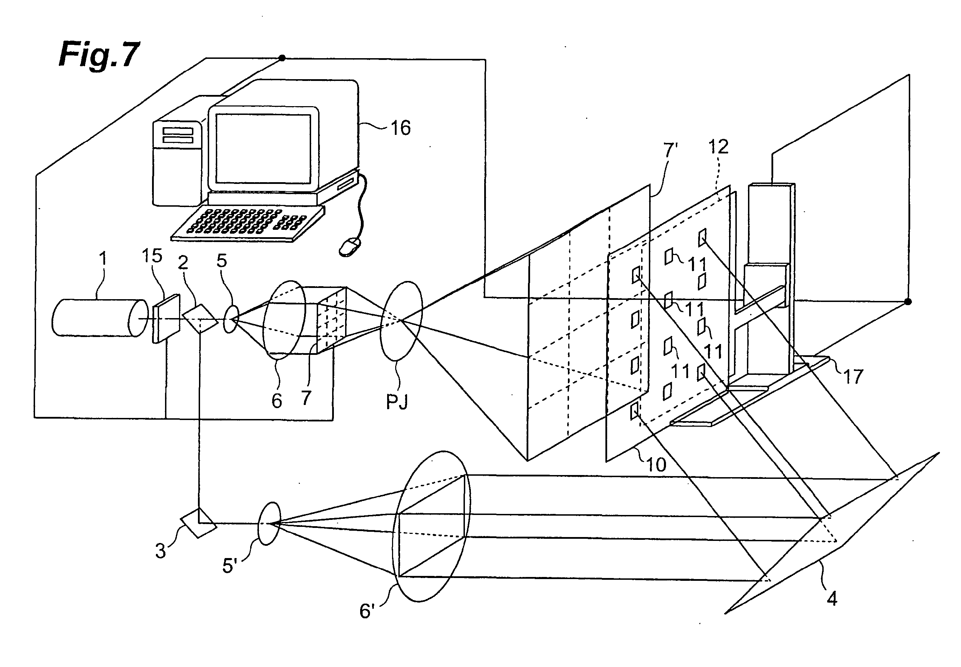

Fig. 7 is a view for explaining a hologram formation apparatus including an optical system for use in the formation of a master hologram. In this embodiment, as in the above-mentioned embodiments, a master hologram is formed first, and then a slave hologram is formed using this master hologram. In the apparatus according to this embodiment, a plurality of parallax images are displayed on a spatial optical modulating device 7 and simultaneously projected onto a diffusing screen 7', thereby exposing a photosensitive material 12 to element holograms corresponding to these parallax images at the same time, in the apparatus according to the fourth embodiment.

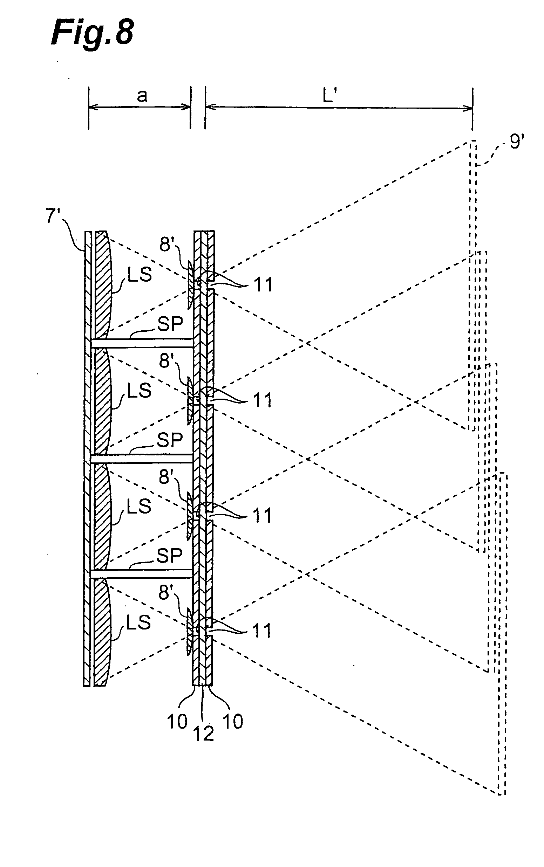

Fig. 8 is a view showing the vertical sectional structure of a hologram recording unit including mask plates 10 arranged near the photosensitive material 12, the diffusing screen 7', and the like. In this embodiment, a plurality of microlenses 8' arranged in one-to-one correspondence with the projected parallax images are used instead of the lens 8 used in the above embodiments. Each individual element hologram achieves the same function as in the above embodiments. In this arrangement, however, separating plates SP are formed to separate the lenses 8'. This embodiment will be described in detail below with reference to Figs. 7 and 8.

This apparatus includes a laser light source 1 for emitting a single-wavelength laser beam, a half mirror 2 for splitting the laser beam emitted from the laser light source 1, and a shutter 15 such as a liquid crystal shutter inserted into the optical path between the laser light source 1 and the half mirror 2. As in the aforementioned embodiments, the laser beams split by the half mirror 2 pass through an object light emitting optical system and a reference light emitting optical system, and irradiate the front and rear surfaces, respectively, of the photosensitive material 12.

The object light emitting optical system includes a beam expander composed of lenses 5 and 6, the spatial optical modulating device 7, a projecting lens PJ, and the image forming lenses 8'. The lenses 5 and 6 are so arranged that the light passing through the half mirror 2 enters as principal rays. The spatial optical modulating device 7 is irradiated with a plane wave whose beam diameter is increased by the beam expander. This spatial optical modulating device 7 also simultaneously displays parallax images observed from a plurality of views. The projecting lens PJ projects, onto the diffusing screen 7', the light (a plurality of spatial optical modulating device images) passing through the spatial optical modulating device 7. These spatial optical modulating device images projected onto the diffusing screen 7' enter the image forming lenses 8'. The output object light from the image forming lenses 8' is incident on the front surface of the photosensitive material 12.

In this embodiment, display images observed from a plurality of views irradiate the photosensitive material 12 as the object light via the image forming lenses 8'.

The reference light emitting optical system includes plane reflecting mirrors 3 and 4 and a beam expander. The reflecting mirrors 3 and 4 further reflect the reflected light from the half mirror 2 and guide this reflected light toward the back surface of the photosensitive material 12. The beam expander is placed in the optical path between these reflecting mirrors 3 and 4 and composed of lenses 5' and 6'. The rear surface of the photosensitive material 12 inclines to the incident direction of the reference light. In this embodiment, the beam diameter of the reference light is increased by the beam expanders 5' and 6'. Therefore, plane-wave reference light irradiates a region including a plurality of spatial optical modulating device images emitted onto the photosensitive material 12. Note that the front surface of this photosensitive material 12 is perpendicular to the optical axes of the image forming lenses 8', so the principal rays (object light) of incident light to each image forming lens 8' are perpendicularly incident on the photosensitive material 12.

Accordingly, from the front-surface side, a plurality of spatial optical modulating device images are perpendicularly incident, as object light, on different regions (each region corresponds to a view) of the photosensitive material 12. From the rear-surface side, reference light beams are incident on the same regions of the photosensitive material 12 in one-to-one correspondence with the spatial optical modulating device images. By this incidence, a plurality of microscopic regions in the photosensitive material 12 are exposed to a plurality of Lippmann element holograms at the same time. More specifically, the photosensitive material 12 is sandwiched between the two mask plates 10 having a plurality of openings 11 only in the plurality of microscopic regions described above. Interference fringes generated in these microscopic regions by the incidence of the spatial optical modulating device images and reference light are recorded in these microscopic regions of the photosensitive material 12. To improve the utilization of light entering each lens 8', lenses LS arranged in one-to-one correspondence with these lenses 8' converge the light beams to the mask holes 11 of the front mask plate 10. Also, to prevent mixing of the output light beams (spatial optical modulating device images) from these lenses LS, a lattice-like partition 10 inserted between the screen and the front mask plate 10 prevents the light of a certain image from mixing into a different mask hole.

In this embodiment, parallax images observed from a plurality of views are simultaneously displayed in those positions on the spatial optical modulating device 7, which correspond to these views, and at the same time the element holograms described above are recorded (by exposure) in those positions of the photosensitive material 12, which correspond to the views. Note that these element hologram images are arranged in a matrix manner on the photosensitive material 12. In this embodiment, twelve images are projected to record twelve element holograms at one time. A computer 16 controls the shutter 15, the image display on the spatial optical modulating device 7, and a moving stage 17 which two-dimensionally moves the photosensitive material 12 in a plane (x-y plane) perpendicular to the normal of the surface of this photosensitive material 12.

In this control, the computer 16 first transfers a plurality of parallax images to the spatial optical modulating device 7 and displays these images (in this embodiment, twelve images) at once. Next, the computer 16 opens the shutter 15 for a predetermined time to simultaneously record twelve element holograms. If the number of these element holograms to be simultaneously recorded is very large, the whole photosensitive material 12 can be filled with the element holograms by one-time exposure. However, since the number is twelve in this embodiment, exposure is repeated a plurality of times. That is, after the first twelve element holograms are simultaneously recorded, the computer 16 closes the shutter 15 and moves the photosensitive material 12 by controlling the moving stage 17 such that the next exposure positions of this photosensitive material 12 are irradiated with the next element holograms. After that, the computer 16 returns to the step of transferring images to the spatial optical modulating device, and repeats the processing after that. In this embodiment, the foregoing are repeated over the entire surface of the photosensitive material 12.

When this photosensitive material 12 is developed, as in the above embodiments, a master hologram (12') is formed which has a plurality of Lippmann element holograms each of which changes its transmittance and/or phase in accordance with the intensity of the interference fringes recorded in the microscopic region. This master hologram 12' is a holographic stereogram obtained by recording, on the photosensitive material 12, a plurality of images formed by actually observing an object from a plurality of views, or a plurality of images (computer graphics) regarded as being virtually observed by computations, in accordance with the views. Note that this master hologram 12' is a Lippmann hologram and functions as a multilayered film interference filter having reflectance only to a specific wavelength.

In this embodiment, the image forming lenses 8' are arranged immediately before the mask holes, so only portions near the centers of these lenses are used. Accordingly, high-quality master holograms can be formed even when small inexpensive lenses having aberration are used.

Details of the parts used in this embodiment will be described below. The spatial optical modulating device 7 is the LCX023AL (manufactured by SONY CORP.) having 1,024 pixels x 768 pixels. On this screen, 3 x 4 = 12 images each having 256 pixels x 256 pixels are simultaneously displayed. A photographic lens having focal length f = 50 mm and F-number = 1.2 is used as the projecting lens PJ to project these images on an enlarged scale into 96 mm x 128 mm. Therefore, the dimensions of one image are 32 mm x 32 mm. The distance between the screen 7' and the mask plate 10 is 19.8 mm, and the viewing angle of one element hologram is $\pm39°$. The image forming lens 8' has a diameter of 12 mm and focal length f = 15 mm. The position of this image forming lens 8' is so adjusted that a distance L from an element hologram to an image formation position is 100 mm.

The master hologram 12' formed in this embodiment is substantially identical with that formed in the second or fourth embodiment described earlier, and the slave hologram formation step and reconstruction step explained with reference to Fig. 4 are used. These steps will be described below with reference to Fig. 4.

As in the above embodiments, the optical system such as the lens 8' is removed, and reconstructing light 20 incident in the same direction as the reference light in Fig. 7 is used as the reconstructing light of the master hologram 12' to perform reconstruction. In this case, the reconstructing light 20 irradiating a plurality of element holograms has a 0th-order diffracted light component which is directly transmitted through the element holograms in the light travelling direction, and 1st-order diffracted light components which are so reflected as to have the same wave surface as the object light.

Since this 1st-order diffracted light components are the same as the object light when the master hologram is formed, an image of this 1st-order diffracted light component is formed in the image formation position of the object light in the formation of the master hologram. Letting f be the focal length of the lens 8' and $\underline{a}$ be the distance between the diffusing filter 7' and the lens 8', the image formation position of the object light is a > f in this embodiment. Therefore, the image formation position is a position (to be referred to as a real image position and represented by a distance L' from the master hologram 12' (photosensitive material 12) hereinafter) farther from the lens 8' than the rear focal point of the lens 8'. That is, the output object light from each lens 8' is a spatial optical modulating device image (to be referred to as a real image hereinafter) 9' assumed to be formed in the real image position L'. Accordingly, when the reconstructing light 20 is emitted, real images 9' from a plurality of element holograms are formed as they are superposed in the real image position L'. This is the object light when a slave hologram is formed. Note that in Fig. 8, the positions of the real images 9' are intentionally shifted to avoid the complexity of the drawing.

When a new photosensitive material 12" is placed in the real image position L' and irradiated with plane-wave reference light 40 from the side opposite to the object light, Lippmann recording is performed. After development, one slave hologram in which a plurality of parallax images are recorded can be formed. When this slave hologram (12") is irradiated with conjugate reference light as reconstructing light 50, an image hologram is reconstructed. Reflected diffracted light which the slave hologram forms from this reconstructing light 50 corresponds to the superposed parallax images. This light can be observed from the side of the master hologram 12'.

In this embodiment, the real image 9' is used as the object light in the formation of a slave hologram by setting a > f. The distance L' between this real image 9' and an element hologram is calculated using equation (5), and the magnification and perspective transform are calculated using equations (6) and (7). The same equations are used when not a real image but a virtual image 9 is used as the object light in the formation of a slave hologram by setting a < f.

The individual optical elements used in this embodiment are so designed that the distance between element holograms to be recorded at once is shortened, and that the interval between the screen and an element hologram is also shortened in order to record up to rays having a large incident angle into an element hologram. However, the distance L' between the master hologram 12' and the reconstructed image of this master hologram 12' must be increased during reconstruction, so this distance L' is determined by adjusting the distance between the lens 8' and the diffusing screen 7'.

In the two-step type hologram formation as described above, a real image or virtual image on a screen or on a spatial optical modulating device is an image type hologram, and this hologram is observed. Therefore, the vertical-horizontal resolution of this hologram is equivalent to that of a reconstructed image to be observed. This resolution can be increased with relative ease by taking account of the magnifications of the spatial optical modulating device and its screen and the magnification of the real or virtual image on the spatial optical modulating device. The size of an element hologram forming a master hologram is related to the angular resolution, i.e., the depth resolution of a reconstructed image. In addition, the position of a master hologram corresponding to the one-step type hologram can be placed near a view. Hence, no unnaturalness occurs even when the size of an element hologram is increased to that of a pupil.

In the above embodiment, a plurality of images are displayed at once, and a plurality of element holograms are recorded at one time. However, the optical system remains compact, and the intervals between element holograms are not increased. This can widen the viewing angle of each element hologram. Also, even when a master hologram is recorded with a simple configuration, the interval between this master hologram and a salve hologram can be increased when the slave hologram is recorded. Accordingly, different light beams can be used as the illuminating light of the master hologram and the reference light of the slave hologram. This can make the light intensity and incident angle of one light beam different from those of the other.

As has been explained in detail above, the aforementioned hologram formation method is characterized by comprising the first step of forming a master hologram 12' by obtaining an image displayed on a spatial optical modulating device 7 or on a diffusing screen 7' as object light, irradiating a first recording surface 12 with the object light together with reference light via a lens 8 (8'), and recording interference light of the object light and the reference light on the first recording surface 12, and the second step of forming a slave hologram by setting a second recording surface 12" in a position where a real image L' or a virtual image L of the object light is formed by the lens 8 (8'), irradiating the master hologram 12' with reference light or conjugate reference light such that the image is formed on the second recording surface 12" and at the same time irradiating the second recording surface 12" with another reference light or another conjugate reference light, and recording interference light of the reference light and another reference light, or of the conjugate reference light and another conjugate reference light, on the second recording surface 12".

In this method, the distance between the spatial optical modulating device 7 or the diffusing screen 7' and the first recording surface 12 when the master hologram 12' is recorded can be made different from the distance between the master hologram 12' and the second recording surface 12" when the slave hologram 12" is recorded. By varying these distances as needed, a hologram can be formed using a small optical system.

The first step preferably comprises the element hologram formation step of obtaining a parallax image actually or virtually observed from a predetermined view as the object light, and recording interference light of this object light and the reference light in that position on the first recording surface 12, which corresponds to the view, and repeats the element hologram formation step such that a plurality of views are obtained. In this case, a master hologram can function as a holographic stereogram.

The first step can also comprise the element hologram formation step of obtaining parallax images actually or virtually observed from a plurality of views as the object light, and recording interference light of this object light and the reference light in those positions on the first recording surface, which correspond to the views. As described above, this method can form a hologram by using a small optical system. This is so because the distance to the recording surface can be freely varied. When the distance between the spatial optical modulating device 7 or the diffusing screen 7' and the first recording surface is shortened in the formation of a master hologram, images from a plurality of views can be recorded separately from each other even if they are recorded at once. Accordingly, the recording time can be reduced.

Furthermore, a hologram formation method according to the present invention is a hologram formation method comprising the step of obtaining an image displayed on a spatial optical modulating device 7 or on a diffusing screen 7' as object light, irradiating a first recording surface with the object light together with reference light via a lens, and recording interference light of the object light and the reference light on the first recording surface, wherein the spatial optical modulating device or the diffusing screen is preferably positioned closer to the lens than the front focal point of the lens. Since the spatial optical modulating device or the diffusing screen is positioned closer to the lens than the front focal point of the lens, the optical system can be miniaturized. When the distance between the spatial optical modulating device or the diffusing screen and the first recording surface is shortened in the formation of a master hologram, images from a plurality of views can be recorded separately from each other even if they are recorded at once. Therefore, the recording time can be shortened.

The hologram formation method of the present invention can shorten the recording time and miniaturize the hologram formation optical system. Industrial Applicability

The present invention can be used in the formation of a hologram.

**Claims**

1. A hologram formation method **characterized by** comprising the first step of forming a master hologram by obtaining an image displayed on a spatial optical modulating device or on a diffusing screen as object light, irradiating a first recording surface with the object light together with reference light via a lens, and recording interference light of the object light and the reference light on the first recording surface, and the second step of forming a slave hologram by setting a second recording surface in a position where a real image or a virtual image of the object light is formed by the lens, irradiating the master hologram with reference light or conjugate reference light such that the image is formed on the second recording surface and at the same time irradiating the second recording surface with another reference light or conjugate reference light, and recording interference light of the reference light and said another reference light, or of the conjugate reference light and said another conjugate reference light, on the second recording surface.

2. A hologram formation method according to claim 1, **characterized in that** the first step comprises the element hologram formation step of obtaining a parallax image actually or virtually observed from a predetermined view as the object light, and recording interference light of this object light and the reference light **in that** position on the first recording surface, which corresponds to the view, and repeats the element hologram formation step such that a plurality of views are obtained.

3. A hologram formation method according to claim 1, **characterized in that** the first step comprises the element hologram formation step of obtaining parallax images actually or virtually observed from a plurality of views as the object light, and recording interference light of this object light and the reference light in those positions on the first recording surface, which correspond to the views.

4. (Deleted)

Fig.1

# *Fig.2*

*Fig.3*

# Fig.4

*Fig.5*

EP 1 241 537 A1

*Fig.6*

Fig.7

# *Fig.8*

*Fig.9*

*Fig.10*

## Fig.11

LASER

120

OBJECT
LIGHT

121

REFERENCE
LIGHT

## Fig.12

F'

111

103

LASER

104

| INTERNATIONAL SEARCH REPORT | International application No. |
|---|---|
| | PCT/JP00/09190 |

**A. CLASSIFICATION OF SUBJECT MATTER**
    Int.Cl⁷   G03H1/26

According to International Patent Classification (IPC) or to both national classification and IPC

**B. FIELDS SEARCHED**

Minimum documentation searched (classification system followed by classification symbols)
    Int.Cl⁷   G03H1/00-34

Documentation searched other than minimum documentation to the extent that such documents are included in the fields searched
    Jitsuyo Shinan Koho          1926-1996    Toroku Jitsuyo Shinan Koho   1994-2001
    Kokai Jitsuyo Shinan Koho    1971-2001      Jitsuyo Shinan Toroku Koho   1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 6-266277, A (TOPPAN PRINTING CO., LTD.), 22 September, 1994 (22.09.94), Full text; all drawings   (Family: none) | 1-4 |
| A | JP, 1-321471, A (Dainippon Printing Co., Ltd.), 27 December, 1989 (27.12.89), page 2, lower right column, to page 3, upper right column, line 10; Fig. 1 to 3 (Family: none) | 1-4 |
| X | JP, 11-296057, A (HAMAMATSU PHOTONICS K.K.), 29 September, 1999 (29.09.99), page 5, column 7, lines 31 to 35; Fig. 1 (Family: none) | 4 |
| A | | 1-3 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April, 2001 (05.04.01) | 17 April, 2001 (17.04.01) |

| Name and mailing address of the ISA/ | Authorized officer |
|---|---|
| Japanese Patent Office | |
| Facsimile No. | Telephone No. |

Form PCT/ISA/210 (second sheet) (July 1992)